# EUROPÄISCHE PATENTANMELDUNG

(11) **EP 1 158 234 A1**
(43) Veröffentlichungstag der Anmeldung: **28.11.2001**
(21) Anmeldenummer: 01250125.0
(22) Anmeldetag: 09.04.2001
(51) Int. Cl.: F16L 13/14, B21D 39/04

(54) **Rohrpressverbindung**

(30) Priorität: 24.05.2000 DE 10026083
(71) Anmelder: Mapress GmbH & Co. KG, 40764 Langenfeld (DE)
(72) Erfinder: Sedlak, Bernd, 45478 Mülheim (DE)
(74) Vertreter: Meissner, Peter E., Dipl.-Ing.

(57) **Zusammenfassung**

Die Erfindung betrifft eine Rohrpressverbindung, bestehend aus einem metallischen, im Wesentlichen zylindrisch ausgebildeten Pressfittingelement und einem darin einschiebbaren metallischen dünnwandigen Leitungsrohr, mit dem mittels eines an die Verbindung ansetzenden mindestens zwei Pressbacken aufweisenden Presswerkzeuges nach dem Ansetzen und radialen Schließen eine unlösbare dichte Rohrpressverbindung gebildet wird. Dabei ist das Pressfittingelement (1) auf der Innenseite mit mindestens einem Zahnmittel (10, 10') versehen, das sich beim Verpressen in die Außenseite (15) des eingeschobenen Leitungsrohres (2) eingräbt und auf der Außenseite des Pressfittingelementes (1) im Bereich des Zahnmittels (10, 10') ein aus zwei axial gegeneinander verzwängbaren Elementen (3, 4) bestehender Pressring angeordnet ist, wobei die kegelartig ausgebildete Mantelfläche (29, 40) des jeweiligen Elementes (3, 4) des Pressringes mit der Innenkontur der Pressbacke (5) des Presswerkzeuges in der Weise zusammenwirkt, dass beim Verpressen die radiale Bewegung der Pressbacken (5) des Presswerkzeuges eine axiale Bewegung der beiden Elemente (3,4) des Pressringes gegeneinander und die Verzwängung der beiden Elemente (3,4) eine radiale Bewegung des im Bereich des Zahnmittels (10,10') liegenden Endabschnittes (9) des Pressfittingelementes (1) erzeugt.

## Beschreibung

Diese Erfindung betrifft eine Rohrpressverbindung bestehend aus einem metallischen, im wesentlichen zylindrisch ausgebildeten Pressfittingelement und einem darin einschiebbaren metallischen dünnwandigen Leitungsrohr gemäß dem Oberbegriff des Patentanspruches 1.

Seit längerem gibt es Bestrebungen, unter Verzicht auf Schweißen, Löten oder Gewindeschneiden mit einer Verpresstechnik Rohre mittels eines Fittings miteinander zu verbinden. Dazu wird beispielhaft auf die DE 118 78 70 B1 verwiesen. Bei dieser bekannten Verpresstechnik weist der Pressfitting im Endbereich einen Ringwulst auf, in dem ein Dichtring einlegbar ist. Das zu verbindende Rohr wird in den Pressfitting eingeschoben und der Pressfitting mittels eines zwei Pressbacken aufweisenden Presswerkzeuges auf das eingeschobene Rohr radial gedrückt. Dabei bildet der auf das Rohr gedrückte Dichtring die Dichtebene. Die mit einer Greifschneide versehene Stirnseite des Pressfittings wird ebenfalls beim Verpressen auf das eingeschobene Rohr gedrückt, so dass eine Sicke gebildet wird, die die axiale Sicherung gegen Herausdrücken des unter Innendruck stehenden Rohres bildet. In Weiterentwicklung dieses Konzeptes ist die Greifschneide weggefallen und stattdessen wird der an den Ringwulst sich anschließende zylindrisch ausgebildete Bereich auf das eingeschobene Rohr gedrückt (siehe hierzu beispielhaft Mapress, Trinkwasser-Installation mit Rohren und Rohrverbindungen aus nichtrostenden Stählen, 7/97).

Einen anderen Weg sind diejenigen Hersteller gegangen, die das sogenannte Lokring-System eingesetzt haben (siehe hierzu beispielhaft EP 0 048 003 A1, US 5,114,191). Bei diesem Verbindungssystem wird auf einen in etwa zylindrischen Kupplungskörper, der mindestens auf der Innenfläche mit mindestens einem Zahnelement versehen ist, ein Pressring axial aufgeschoben. Bei diesem Aufschieben graben sich die Zahnmittel in die Außenfläche des eingeschobenen Rohres ein und bilden in Doppelfunktion die Dichtebene und gleichzeitig die axiale Sicherung gegen Herausdrücken des Rohres. Nachteilig beim Lokring-System ist, dass für die Verpressung ein völlig anderes Werkzeug erforderlich ist und zweitens erheblich mehr Platz benötigt wird, um den Pressring axial verschieben zu können.

Aufgabe der Erfindung ist es, für eine Rohrpressverbindung die Vorteile des Lokring-Systems zu nutzen, unter Verwendung der in großen Stückzahlen im Markt sich befindenden Presswerkzeuge für eine radiale Verpressung.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung ist das Pressfittingelement auf der Innenseite mit mindestens einem Zahnmittel versehen, das sich beim Verpressen in die Außenoberfläche des eingeschobenen Leitungsrohres eingräbt. Auf der Außenseite des Pressfittingelementes ist im Bereich des Zahnmittels ein aus zwei axial gegeneinander verzwängbaren Elementen bestehender Pressring angeordnet. Die kegelartig ausgebildete Mantelfläche des jeweiligen Elementes des Pressringes wirkt mit der Innenkontur der Pressbacke des Presswerkzeuges in der Weise zusammen, dass beim Verpressen die radiale Bewegung der Pressbacken des Presswerkzeuges eine axiale Bewegung der beiden Elemente des Pressringes gegeneinander und die Verzwängung der beiden Elemente eine radiale Bewegung des im Bereich des Zahnmittels liegenden Endabschnitt des Pressfittingelementes erzeugt.

Entsprechend dem Merkmal eines Ausführungsbeispieles bilden zwei im Abstand voneinander angeordnete Zahnmittel die Dichtebene und unterstützen die axiale Sicherung. Die Zahnmittel sind in einer nutartigen Ausnehmung in dem der Einschubseite zugewandten Endbereich des Pressfittingelementes angeordnet. Damit beim Einschieben des Leitungsrohres die Zahnmittel nicht beschädigt werden, ist die lichte Weite der Zahnmittel mindestens gleich oder etwas größer als die lichte Weite des Grundkörpers des Pressfittingelementes. Um die im Markt sich befindenden Pressbacken auch für dieses System nutzen zu können, muss beachtet werden, dass sich der aus dem Endabschnitt des Pressfittingelementes und des Elementes des Pressringes ergebende maximale äußere Durchmesser der maximalen Öffnungsweite des Presswerkzeuges angepasst ist. Weiterhin muss beachtet werden, dass die radiale Erstreckung der Elemente des Pressringes nicht zu gering ist, damit sie die Kräfte übertragen können. Anderenfalls würden sie in unzulässiger Weise aufgeweitet werden. Eine der Möglichkeiten der Abstimmung ist die Wanddicke des Endabschnittes geringer zu wählen als die Wanddicke des Grundkörpers des Pressfittingelementes.

Der Vorteil der vorgeschlagenen Rohrpressverbindung ist darin zu sehen, dass das Pressfittingelement einfach herzustellen ist und die im Markt sich befindenden Presswerkzeuge für das Verpessen verwendet werden können. Außerdem ist im Vergleich zum Lokring-System kein zusätzlicher axialer Platzbedarf für das Ansetzen des Presswerkzeuges erforderlich.

Weitere Merkmale, Vorteile und Einzelheiten der Erfindung ergeben sich aus der nachfolgenden Beschreibung von einem in einer Zeichnung dargestellten Ausführungsbeispiel. Es zeigen:
- Fig. 1: in einem hälftigen Teillängsschnitt eine erfindungsgemäß ausgebildete Anordnung einer Rohrpressverbindung vor der Verpressung;
- Fig 2: in einem hälftigen Teillängsschnitt ein Pressfittingelement;
- Fig. 3 a): in einem hälftigen Längsschnitt ein erstes Element des Pressringes;

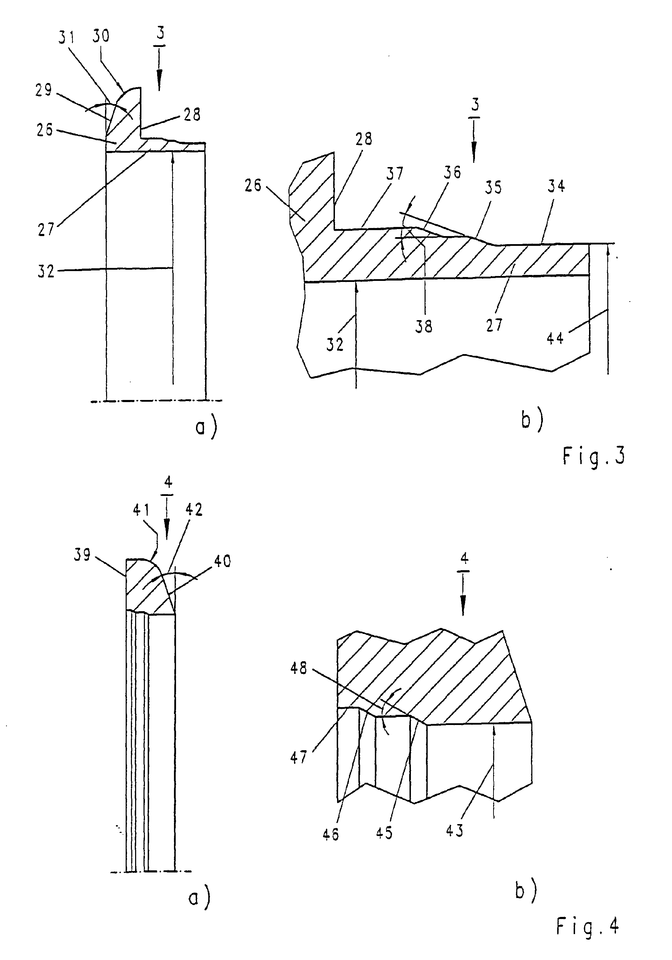

- Fig. 3 b): in einer Vergrößerung das Detail X in Fig. 3 a);
- Fig. 4 a): in einem hälftigen Längsschnitt ein zweites Element des Pressringes;
- Fig. 4 b): in einer Vergrößerung das Detail X in Fig. 4 a);

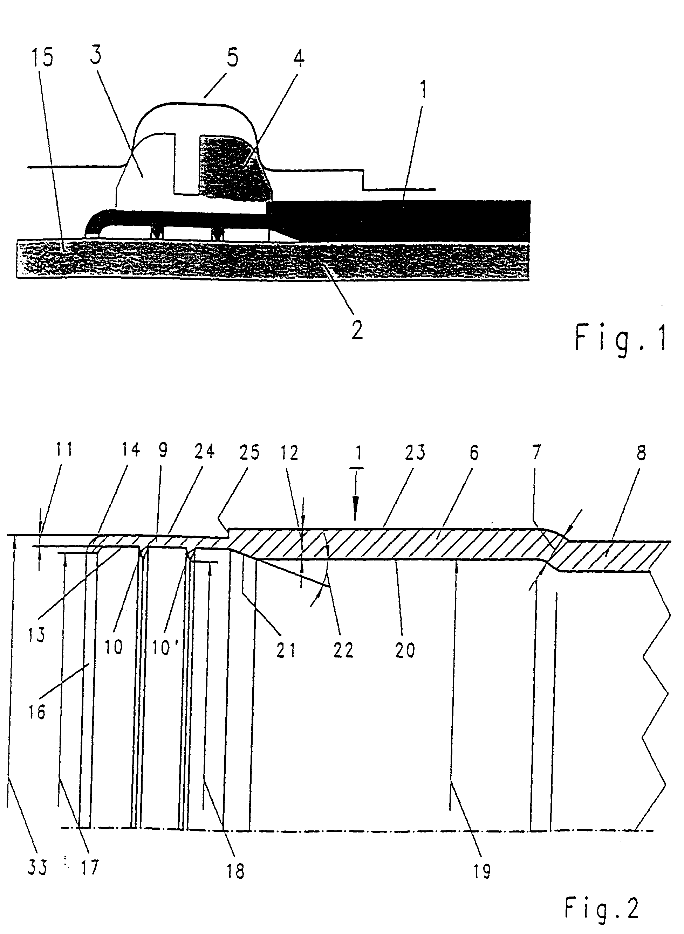

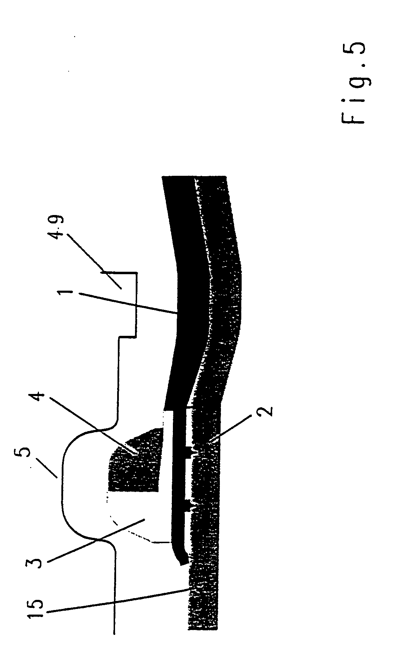

- Fig. 5: wie Fig. 1, aber nach der Verpressung.

In Fig. 1 ist in einem hälftigen Teillängsschnitt skizzenhaft eine erfindungsgemäß ausgebildete Anordnung einer Rohrpressverbindung vor der Verpressung dargestellt.

Die Anordnung besteht aus einem Pressfittingelement 1 (Fig. 2), einem darin eingeschobenen Leitungsrohr 2, einem aus zwei Elementen 3, 4 bestehenden Pressring sowie skizzenhaft angedeutet einem Teil einer angesetzten Pressbacke 5 eines ansonsten nicht dargestellten Presswerkzeuges.

Fig. 2 zeigt in einem hälftigen Teillängsschnitt das erfindungsgemäß ausgebildete Pressfittingelement 1. Es weist einen zylindrisch ausgebildeten Grundkörper 6 auf, der nach rechts sich erstreckend nach einem nach innen sich erstreckenden Absatz 7 übergeht in einen weiteren zylindrisch ausgebildeten Abschnitt 8. Der Absatz 7 bildet auf der Innenseite einen Anschlag für das einzuschiebende Leitungsrohr 2. Je nachdem um welchen Fittingtyp es sich handelt, kann das Pressfittingelement 1 Bestandteil einer Muffe, eines Bogens, eines Reduzierstückes oder dergl. sein. Im Falle einer Muffe würde der hier links liegende Teil des Pressfittingelementes 1 spiegelbildlich sich auf der rechten Seite wiederholen. Im hier links liegenden Endabschnitt 9 sind auf der Innenseite zwei im Abstand voneinander liegende Zahnmittel 10, 10' angeordnet. Die Zahnmittel 10, 10' sind als spitze Zähne ausgebildet. Zur Anpassung an die Gegebenheiten der im Markt vorhandenen Pressbacken 5 ist in diesem Ausführungsbeispiel die Wanddicke 11 des Endabschnittes 9 geringer gewählt als die Wanddicke 12 des Grundkörpers 6 des Pressfittingelementes. Um die Zahnmittel 10, 10' anordnen zu können, weist der Endabschnitt 9 eine nutenartig ausgebildete Ausnehmung 13 auf. Der Stirnseitenbereich 14 ist in diesem Ausführungsbeispiel gekrümmt ausgebildet mit einer Öffnung 16, deren lichte Weite 17 größer ist als die lichte Weite 18 der Zahnmittel 10, 10'. Damit beim Einschieben des Leitungsrohres 2 in das Pressfittingelement 1 die Zahnmittel 10, 10' nicht beschädigt werden bzw. die Oberfläche des Leitungsrohres 2 nicht verkratzt wird, ist die lichte Weite 18 der Zahnmittel 10, 10' mindestens so groß wie die lichte Weite 19 des Grundkörpers 6 oder größer. Der Übergang von der Innenseite 20 des Grundkörpers 6 zur Ausnehmung 13 des Endabschnittes 9 ist als Kegel 21 ausgebildet mit einem Kegelwinkel 22 zwischen 20-30°. Der Übergang von der Außenseite 23 des Grundkörpers 6 zur Außenseite 24 des Endabschnittes 9 ist als rechtwinkliger Absatz 25 ausgebildet.

In den Fig. 3 a), 3 b) ist in einem hälftigen Längsschnitt bzw. in einer Vergrößerung das in Fig. 1 links angeordnete Element 3 des Pressringes dargestellt. Es weist im Querschnitt eine L-Form auf, mit einem dickwandigen senkrecht stehenden kurzen Schenkel 26 und einem dünnwandigeren horizontal liegenden langen Schenken 27. Der kurze Schenkel 26 weist auf der der Einschubrichtung für das Leitungsrohr 2 abgewandten Seite eine gerade Stirnfläche 28 und auf der gegenüberliegenden Seite eine kegelig ausgebildete Mantelfläche 29 auf, die nach oben hin mit einer Abrundung 30 versehen ist. Die Kegelneigung 31 liegt zwischen 15° und 30°. Die lichte Weite 32 des linken Elementes 3 ist gleich oder etwas größer als der äußere Durchmesser 33 (Fig. 2) des Endabschnittes 9 des Pressfittingelementes 1, so dass das Element 3 in einfacher Weise auf diesen Endabschnittes 9 geschoben werden kann. Der lange Schenkel 27 des Elementes 3 weist auf der Außenseite zuerst einen zylindrischen Abschnitt 34 auf, an den sich ein kegelig ausgebildeter Absatz 35 und danach ein zweiter kegelig ausgebildeter Absatz 36 anschließt. Danach folgt ein weiterer zylindrisch ausgebildeter Abschnitt 37, der an der Stimfläche 28 endet. Die Kegelsteigung 38 beider kegelig ausgebildeter Absätze 35, 36 liegt bei etwa 20°.

In den Fig. 4 a), 4 b) ist in einem hälftigen Längsschnitt bzw. in einer Vergrößerung das in Fig. 1 rechts liegende Element 4 des Pressringes dargestellt. Dieses Element 4 ist im Querschnitt als kompakter Körper ausgebildet, der auf der der Einschubrichtung für das Leitungsrohr 2 zugewandten Seite eine gerade Stirnfläche 39 und auf der gegenüberliegenden Seite eine kegelig ausgebildete Mantelfläche 40 aufweist, die nach oben hin mit einer Abrundung 41 versehen ist. Die Kegelneigung 42 liegt zwischen 20° und 30°. Die lichte Weite 43 des rechten Elementes 4 ist gleich oder etwas größer als der äußere Durchmesser 44 des langen Schenkels 27 des linken Elementes 3, so dass das rechte Element 4 ohne Probleme auf das linke Element 3 aufgeschoben werden kann. Komplementär zum linken Element 3 sind auf der Innenseite des rechten Elementes 4 zwei kegelig ausgebildete Absätze 45, 46 vorgesehen, wobei der letztgenannte Absatz 46 in einen zylindrischen Bohrungsabschnitt 47 übergeht. Die Kegelneigung 48 beider Absätze 45, 46 ist gleich, und liegt bei etwa 20°.

Figur 5 zeigt vergleichbar wie Figur 1 in einem hälftigen Teillängsschnitt skizzenhaft die Rohrpressverbindung nach der Verpressung. Durch das axiale Verzwängen der beiden Elemente 3,4 des Pressringes haben sich die Zahnmittel 10,10' in die Außenoberfläche 15 des Leitungsrohres 2 eingegraben. Dadurch wird die Dichtebene gebildet und gleichzeitig die axiale Sicherung unterstützt. Die eigentliche axiale Sicherung wird gebildet durch eine plastische Verformung des Grundkörpers 6 des Pressfittingelementes einschließlich des darunter liegenden Abschnittes des Leitungsrohres 2 mittels des Presssteges 49 der Pressbacke 5.

Die Herstellung einer erfindungsgemäß ausgebildeten Rohrpressverbindung weist folgende Arbeitsschritte auf:
a) Das Leitungsrohr 2 wird in das Pressfittingelement 1 eingeschoben, bis es am Absatz 7 zur Anlage kommt.
b) Das rechte Element 4 wird zuvor auf das linke Element 3 ohne Kraftaufwand aufgeschoben.
c) Der aus dem rechten 4 und linken Element 3 gebildete Pressring wird auf den Endabschnitt 9 des Pressfittingelementes 1 ohne Kraftaufwand aufgeschoben. Zwischen dem rechten 4 und dem linken Element 3 verbleibt ein Abstand.
d) Die Pressbacken 5 des Presswerkzeuges werden auf den Pressring angesetzt, so dass die Innenkontur an den beiden keglig ausgebildeten Mantelflächen 29, 40 der Elemente 3, 4 zur Anlage kommt.
e) Das Presswerkzeug wird betätigt, so dass die Pressbacken 5 radial zufahren. Dabei rutscht die Innenkontur der jeweiligen Pressbacke 5 entlang der kegelig ausgebildeten Mantelflächen 29, 40 und drückt die beiden Elemente 3, 4 gegeneinander, wobei dies durch die kegelig ausgebildeten Absätze 35, 36, 45, 46 eine Aufzwängung bedeutet, die eine radiale Kraftkomponente auf den Endabschnitt 9 des Pressfittingelementes 1 erzeugt. Dabei graben sich die Zahnmittel 10, 10' in die Außenoberfläche 15 des Leitungsrohres 2 ein.
f) Die Verpressung ist beendet, wenn die beiden Stirnflächen 28, 39 der beiden Elemente 3, 4 zur Anlage kommen (Fig. 5).

| Bezugszeichenliste: | |
|---|---|
| Nr. | Bezeichnung |
| 1 | Pressfittingelement |
| 2 | Leitungsrohr |
| 3 | linkes Element Pressring |
| 4 | rechtes Element Pressring |
| 5 | Pressbacke |
| 6 | Grundkörper Pressfittingelement |
| 7 | Absatz |
| 8 | zylindrischer Abschnitt |
| 9 | Endabschnitt Pressfittingelement |
| 10, 10' | Zahnmittel |
| 11 | Wanddicke Endabschnitt |
| 12 | Wanddicke Grundkörper |
| 13 | Ausnehmung |
| 14 | Stimseitenbereich |
| 15 | Außenoberfläche Leitungsrohr |
| 16 | Öffnung |
| 17 | lichte Weite der Öffnung |
| 18 | lichte Weite Zahnmittel |
| 19 | lichte Weite Grundkörper |
| 20 | Innenfläche Grundkörper |
| 21 | Kegel |
| 22 | Kegelwinkel |
| 23 | Außenseite Grundkörper |
| 24 | Außenseite Endabschnitt |
| 25 | Absatz |
| 26 | kurzer Schenkel linkes Element |
| 27 | langer Schenkel linkes Element |
| 28 | Stirnfläche linkes Element |
| 29 | Mantelfläche |
| 30 | Abrundung |
| 31 | Kegelneigung Mantelfläche |
| 32 | lichte Weite linkes Element |
| 33 | äußerer Durchmesser Endbereich |
| 34 | zylindrischer Abschnitt |
| 35, 36 | kegelig ausgebildeter Absatz linkes Element |
| 37 | zylindrischer Abschnitt |
| 38 | Kegelsteigung Absätze |
| 39 | Stirnfläche rechtes Element |
| 40 | Mantelfläche |
| 41 | Abrundung |
| 42 | Kegelneigung Mantelfläche |
| 43 | lichte Weite rechtes Element |
| 44 | äußerer Durchmesser langer Schenkel linkes Element |
| 45, 46 | kegelig ausgebildeter Absatz rechtes Element |
| 47 | Bohrungsabschnitt |
| 48 | Kegelneigung |
| 49 | Presssteg der Pressbacke |

## Patentansprüche

1. Rohrpressverbindung, bestehend aus einem metallischen, im Wesentlichen zylindrisch ausgebildeten Pressfittingelement und einem darin einschiebbaren metallischen dünnwandigen Leitungsrohr, mit dem mittels eines an die Verbindung ansetzenden mindestens zwei Pressbacken aufweisenden Presswerkzeuges nach dem Ansetzen und radialen Schließen eine unlösbare dichte Rohrpressverbindung gebildet wird,
**dadurch gekennzeichnet,**
**dass** das Pressfittingelement (1) auf der Innenseite mit mindestens einem Zahnmittel (10, 10') versehen ist, das sich beim Verpressen in die Außenseite (15) des eingeschobenen Leitungsrohres (2) eingräbt und auf der Außenseite des Pressfittingelementes (1) im Bereich des Zahnmittels (10, 10') ein aus zwei axial gegeneinander verzwängbaren Elementen (3, 4) bestehender Pressring angeordnet ist, wobei die kegelartig ausgebildete Mantelfläche (29, 40) des jeweiligen Elementes (3, 4) des Pressringes mit der Innenkontur der Pressbacke (5) des Presswerkzeuges in der Weise zusammenwirkt, dass beim Verpressen die radiale Bewegung der Pressbacken (5) des Presswerkzeuges eine axiale Bewegung der beiden Elemente (3,4) des Pressringes gegeneinander und die Verzwängung der beiden Elemente (3,4) eine radiale Bewegung des im Bereich des Zahnmittels (10,10') liegenden Endabschnittes (9) des Pressfittingelementes (1) erzeugt.

2. Rohrpressverbindung nach Anspruch 1,
**dadurch gekennzeichnet,**
**dass** das Pressfittingelement (1) mit einem zweiten Zahnmittel (10, 10') versehen ist, das im Abstand zum ersten Zahnmittel angeordnet ist.

3. Rohrpressverbindung nach den Ansprüchen 1 und 2,
**dadurch gekennzeichnet,**
**dass** beide Zahnmittel (10, 10')nach Art und Ausbildung gleich sind.

4. Rohrpressverbindung nach den Ansprüchen 1 - 3,
**dadurch gekennzeichnet,**
**dass** das Pressfittingelement (1) in dem der Einschubseite zugewandten Endabschnitt (9) eine nutenartige Ausnehmung (13) aufweist, in der bzw. die Zahnmittel (10, 10') angeordnet sind.

5. Rohrpressverbindung nach den Ansprüchen 1 - 4,
**dadurch gekennzeichnet,**
**dass** die lichte Weite (18) der Zahnmittel (10, 10')mindestens gleich oder etwas größer ist als die lichte Weite (19) des Grundkörpers (6) des Pressfittingelementes (1).

6. Rohrpressverbindung nach einem der Ansprüche 1-5
**dadurch gekennzeichnet,**
**dass** der sich aus Endabschnitt (9) des Pressfittingelementes (1) und Elemente (3,4) des Pressringes ergebende maximale äußere Durchmesser der maximalen Öffnungsweite des Presswerkzeuges angepasst ist.

7. Rohrpressverbindung nach Anspruch 6,
**dadurch gekennzeichnet,**
**dass** der Endabschnitt (9) des Pressfittingelementes (1) eine geringere Wanddicke (11) aufweist als der Grundkörper (6) des Pressfittingelementes (1).

8. Rohrpressverbindung nach einem der Ansprüche 1 - 7,
**dadurch gekennzeichnet,**
**dass** die lichte Weite (17) des Stirnseitenbereiches (14) des Pressfittingelementes (1) größer ist als die lichte Weite (18) des Zahnmittels (10, 10'), aber kleiner als die lichte Weite der nutenartigen Ausnehmung (13) des Endabschnittes (9).

9. Rohrpressverbindung nach einem der Ansprüche 1 - 8,
**dadurch gekennzeichnet,**
**dass** ein Element (3) des Pressringes eine L-Form aufweist, wobei die Innenseite des langen Schenkels (27) auf der Außenseite des Endabschnittes (9) des Pressfittingelementes(1) zur Anlage kommt und die Außenseite des langen Schenkels (27) mit mindestens einem kegelartigen Absatz (35, 36) versehen ist.

10. Rohrpressverbindung nach einem der Ansprüche 1 - 9,
**dadurch gekennzeichnet,**
**dass** das zweite Element (4) des Pressringes auf der Innenseite mit mindestens einem komplementär zum ersten Element (3) ausgebildeten kegelartigen Absatz (45, 46) versehen ist und nach dem Ansetzen, aber vor dem Verpressen, die beiden Elemente (3, 4)des Pressringes einen Abstand zueinander aufweisen und nach dem Verpressen die beiden gegenüberliegenden Stirnflächen (28, 39) beider Elemente (3, 4) zur Anlage kommen.
